# EUROPEAN PATENT APPLICATION

(11) **EP 2 712 132 A1**
(43) Date of publication of application: **26.03.2014**
(21) Application number: 13185072.9
(22) Date of filing: 19.09.2013
(51) Int. Cl.: H04L 12/58

(54) **A method for displaying e-mail messages to a user**

(30) Priority: 19.09.2012 US 201213622853
(71) Applicant: PERION NETWORK LTD, Tel Aviv 69710 (IL)
(72) Inventor: Harari, Ron, 49407 Petach Tikva (IL); Wurgaft, Amit, 64954 Tel Aviv (IL); Marmur, Ziv Moshe, 58328 Holon (IL); Malka, Maayan Michael, 69052 Tel Aviv (IL); Shmueli, Lirit, 52564 Ramat-Gan (IL); Cohen, Oren, 63666 Tel Aviv (IL); Neuman, Ofir, 60407 Or Yehuda (IL); Israel, Eran, 93716 Jerusalem (IL); Tsirlin, Dan, 45295 Hod Hasharon (IL)
(74) Representative: Modiano, Micaela Nadia

(57) **Abstract**

A method and a software product for use in a communications network for sorting and simultaneously displaying characterizing images of a plurality of messages, wherein the plurality of messages comprises email messages and/or messages that are based on information retrieved from one or more e-mail messages, the method comprising the steps of: receiving a first plurality of e-mail messages addressed to a specific user; analyzing content of the first plurality of e-mail messages and generating a characterizing image for each of a second plurality from among the first plurality of messages, wherein the characterizing images will be displayed to the specific user simultaneously with the characterizing images of other messages belonging to the second plurality of messages; displaying the characterizing images generated in a plurality of cells arranged in a displaying grid, wherein each of the characterizing images is displayed at a separate cell of the displaying grid.

## Description

### TECHNICAL FIELD

The present disclosure generally relates to a system and method of sorting and displaying Internet-based messages and in particularly, e-mail messages.

### BACKGROUND

There are a number of email applications that are typically used for sending and receiving email messages. Among which are Microsoft Outlook, Eudora, Mozilla, Chrome and the like, and browser based email systems such as YahooMail and GoogleMail.

The use of electronic mail (e-mail) programs is nowadays one of the most common operations in the digital world, if not the most common one. In every personal computer whether it is a desktop computer, a laptop computer, a cellular telephone and a tablet computer, e-mail programs are the most commonly used programs.

The first e-mail programs were developed during the seventies of the last century, and although the e-mail programs have been substantially developed over the years, typically they may still be characterized by their following features:
1. They serve the functional need of reviewing mail messages that were received for the recipient;
2. Their operation relies upon the use of the personal computer's mouse and keyboard;
3. They are designed from human engineering view point of working station that comprises a desk and a chair.

These characteristics are not necessarily valid with the last decade developments, when tablet computers and smart phones are used. There is a number of e-mail applications that are presently used for tablet computers and smart phones, but they do not provide adequate functional, technological and improved user experience solutions. The existing applications typically present to the user the e-mail messages received in a way that is derived from e-mail applications implemented for desktop computers, which have not been significantly adapted for their use by tablet computers and smart phones. Typically, currently used applications present the e-mail messages by providing the user with certain details that relate to the respective messages, such as the header of the message and certain details such as name of the sender, time received, size of the message, etc., without taking into consideration the different user experience which the users of the tablet computers and smart phones have grown to expect, and without taking into consideration the contents of the e-mail message nor the attachments (e.g. photos, files) to these messages.

Furthermore, in today's world, the boundaries between e-mails and instant messages are fading out (e.g. Facebbok^{®}) and between instant message to SMS (for iphone^{®} users).

But in addition, most of today's applications are proprietary applications which allow the use of only e-mail accounts that are handled by the company who had developed the respective application. For example, the Gmail^{®} application may be used only by Gmail accounts' holders and not by users who hold other e-mail accounts.

Another problem associated with the commonly used solutions is the creation of content-rich messages, as these applications do not enable the users to enrich content by incorporating snippets in their e-mail messages.

### SUMMARY OF THE DISCLOSURE

The disclosure may be summarized by referring to the appended claims.

It is an object of the present invention to provide a new method for displaying e-mail messages or messages derived from e-mail transmissions.

It is another object of the present invention to provide a new method for displaying a preview list of messages in a displaying grid, thereby allowing users to easily follow the chronological order of email messages or messages derived from e-mail transmissions.

It is still another object of the present invention to provide a new device and a new method for retrieving information from sent/received e-mail transmissions to allow displaying retrieved information or information derived therefrom.

It is another object of the present invention to provide a new method that allows the user to interact with the application by using gestural interface(s).

It is still another object of the present invention to provide a new method that is adapted to enable the user to aggregate different types of services through which he/she receives messages (e.g. e-mail, instant messaging, IM, facebook messages, SMS messages), as well as other communication services, so that the user may consume all these services through a single service.

Other objects of the present invention will become apparent from the following description.

According to one embodiment, there is provided a method for use in a communications network for sorting and simultaneously displaying characterizing images of a plurality of messages, wherein the plurality of messages comprises e-mail messages and/or messages that are based on information retrieved from one or more e-mail messages, the method comprising the steps of:
receiving a first plurality of e-mail messages addressed to a specific user;
analyzing content of the first plurality of e-mail messages received and generating a characterizing image for each of a plurality of messages whose characterizing images (e.g. characterizing display) will be displayed simultaneously to the specific user, with the characterizing images of the other messages of the plurality of messages;
displaying the characterizing images generated at a plurality of cells arranged within a displaying grid (e.g. in a way similar to a magazine layout), wherein each of the characterizing images is displayed at a separate cell of the displaying grid.

As will be appreciated by those skilled in the art, in accordance with the present invention, the messages whose characterizing image will be displayed may comprise e-mail messages, messages derived based on information included within e-mail messages such as photos and the like, or any combination thereof. The term "characterizing images" as used herein throughout the specification and claims should be understood to encompass abstracts of the e-mail messages on one hand, and on the other hand, indications of messages derived based on information included within e-mail messages such as photos, video clips, power point presentations, URLs, text files, and any other files and types of data as the case may be. Optionally, or in the alternative, the characterizing image should also be understood to encompass the outcome of analyzing the text of the e-mail messages themselves and deriving from that analysis, links to data such as images for example that are not in the form of attachments of the respective e-mail messages.

The characterizing images preferably comprise the most relevant content retrieved from the respective e-mail messages in the analysis step, to allow a reader watching the characterizing image, an easy and quick understanding the content of the e-mail whose characterizing image is being viewed.

Furthermore, it should be understood that although the invention is described herein with respect to e-mail messages and to messages derived from information included in e-mail messages, still, the scope of the invention is not limited solely to e-mail messages, but encompasses any type of applicable communications, including, but not limited to, bulletin board messages, SMS messages, Twitter messages, social network communications and other communications, *mutatis mutandis.*

According to another embodiment there is provided a method for use in a communications network for sorting and displaying together characterizing images of a plurality of messages, wherein the plurality of messages comprises e-mail messages and/or messages that are based on information retrieved from one or more e-mail messages, the method comprising the steps of:
receiving a first plurality of e-mail messages addressed to a specific user;
analyzing content of the first plurality of e-mail messages and generating a characterizing image for each of a second plurality of e-mail messages from among the first plurality of e-mail messages, wherein the characterizing images will be displayed to the specific user simultaneously with the characterizing images of other messages belonging to the second plurality of messages, and wherein the number of messages included in the second plurality of messages is less than or equal to the number of the first plurality of messages;
displaying the characterizing images generated, at a plurality of cells arranged in a displaying grid, wherein each of the characterizing images is displayed at a separate cell of the displaying grid.

In accordance with another embodiment, the method further comprises a step of selecting, based on the analysis of the content of the first plurality of e-mail messages, a second plurality of messages from among that first plurality of e-mail messages received, to be displayed to the specific user. For example, the second plurality may comprise e-mail messages that were found in the analysis step to be more important or more urgent than others, or that have higher priority than others.

By another embodiment, the displaying grid is a size-adaptable displaying grid. In other words, one or more of the cells may be of different dimensions than the others. Also, the cells dimensions may be changed dynamically to accommodate different sizes of characterizing images associated with different messages that need to be displayed.

Furthermore, the structure of each cell may preferably be determined according to the content of the message in order to put the interesting and/or important parts of the message, whether it is an image or a snippet created from a URL, in a prominent location and size.

According to another embodiment, the displaying grid is an asymmetric grid. The term "asymmetric grid" as used herein and throughout the specification and claims encompasses for example cases where one of the columns comprises an odd number of cells while at least one of the other columns an even number of cells. Similarly, one of the rows may comprise an odd number of cells while at least one of the other rows an even number of cells. It was surprisingly found that having such an asymmetry in the displaying grid makes the reading of the messages, easier for the user. In a related embodiment, every pair of adjacent columns will comprise one column of odd number of cells while the other column of that pair - an even number of cells. For example, if the grid comprises three or more columns, the first column and the third column may comprise an odd number of cells while the second (middle) column will comprise an even number of cells. A similar asymmetry may be applied for the rows of the grid.

As will be appreciated by those skilled in the art, the term "size-adaptable grid" should be understood to encompass a group of characterizing images each displayed in its own cell of the grid, and wherein the size of each cell may be adapted per any group of messages whose characterizing images are being simultaneously displayed. Typically, the size of each cell will depend on the size of the characterizing image of the respective message, and preferably, the size of each characterizing image is determined based on the importance of the message and/or the amount of content to be displayed, but at the same time while taking into account that the aggregated cells' area should not exceed the display designated area (e.g. the tablet screen, when being displayed to a tablet user).

According to another embodiment, the method provided further comprises a step of adopting the displaying grid (e.g. the cells' size and/or number) to a determination made regarding the messages whose characterizing images are to be displayed. In addition or in the alternative, the method provided comprises a step of adapting the displaying grid (e.g. the cells' size and/or number) to a determination made based on pre-defined or dynamically updateable parameters that are associated with the specific user (e.g. parameters that were prior configured by that specific user regarding the way he/she wishes the messages to be displayed to him/her, or parameters acquired from learning the user's message reading habits and preferences thereof).

By yet another embodiment, the method further comprises a step of determining a first message which is likely to be the most interesting/important message for the specific user from among the plurality of messages whose characterizing images are being simultaneously displayed to that specific user.

In accordance with still another embodiment, the characterizing image of the so determined first message is displayed in a cell having an area which is greater than the area of any other of the grid's cells at which other characterizing images are displayed together with the characterizing image of the first message.

By yet another embodiment, the step of generating a characterizing image based on the content of the plurality of e-mails messages received, comprises selecting most relevant content from each respective e-mail message in order to allow the specific user to easily and quickly understand what the respective e-mail message is about.

According to another embodiment, the method further comprising a step of enabling the specific user to obtain a more comprehensive view of a message, before retrieving the full message whose characterizing image is being displayed. In other words, the user is provided with a quick and easy way to preview /get a better/get in depth view of e-mail messages received, before having them fully opened, have a quick view of photos attached to e-mail messages, etc., and the user may even according to another embodiment take quick actions based on such previews, all without having to first fully open the e-mail message.

According to still another embodiment, the method provided further comprises a step wherein prior to sending an e-mail message whose characterizing image will be displayed, its sender adds a link of an Internet address to the e-mail message, and when the characterizing image of that e-mail message (after it has been received by the specific user receiving that e-mail) is eventually displayed to the specific user, the characterizing image already comprises information that relates to the content retrieved from a webpage associated with the link address that had been added to the e-mail message. In other words, according to this embodiment when the characterizing image is displayed, it will already comprise a partial graphic view of the content that would be displayed if one were to access himself that link address. That may be either in a form of a picture, or of a text (e.g. a title) or any combination thereof.

By another embodiment, if the link address is associated with a video or audio clip, it may be played by the specific user without having to fully open the respective e-mail message.

According to another embodiment, in case the link address is associated with a video or audio clip, it may be played by the specific user without accessing any additional software application for playing that video clip.

In accordance with somewhat similar embodiment to the preceding one, *mutatis mutandis,* when a sender of one of the e-mail messages whose characterizing image is to be later displayed to the specific user, attaches a file of a presentation software, such as Power Point^{®} presentation, to the e-mail message that will be sent to the specific user, when the characterizing image of that e-mail message is eventually displayed to the specific user, it comprises information that relates to the presentation file, and the presentation file may be played by the specific user without having to open presentation software (e.g. the Microsoft^{®} Power Point^{®} application) to view the presentation.

According to another embodiment, the step of analyzing content of the received first plurality of e-mail messages further comprises a step of prioritizing the e-mail messages belonging to the first plurality of e-mail messages in accordance with information that relates to the generation (i.e. the source) of these e-mail messages, for example depending on their source, pre-defined personal preferences, priority assigned to the source, importance of the e-mail message content, etc.

According to another aspect, there is provided a computer program product encoding a computer program stored on a non-transitory computer-readable medium for executing a set of instructions by a computer system comprising one or more computer processors for establishing a process for sorting and displaying together characterizing images of a plurality of messages, wherein the plurality of messages comprises e-mail messages and/or messages that are based on information retrieved from one or more e-mail messages, the method comprising the steps of:
receiving a first plurality of e-mail messages addressed to a specific user;
analyzing content of the first plurality of e-mail messages and generating a characterizing image for each of a second plurality of messages from among the first plurality of messages, wherein the characterizing images will be displayed to the specific user together with the characterizing images of other messages belonging to the second plurality of messages, and wherein the number of messages included in the second plurality of messages is less than or equal to the number of the first plurality of messages;
enabling display of the characterizing images generated in a plurality of cells arranged in a displaying grid, wherein each of the characterizing images is displayed at a separate cell of the displaying grid.

According to another embodiment of this aspect, the process further comprises a step of selecting, based on the analysis of the content of the first plurality of e-mail messages, a second plurality of messages from among the first plurality of e-mail messages received, whose characterizing images will be displayed to the specific user together with the characterizing images of all other messages belonging to the second plurality of messages.

By another embodiment, the displaying grid is a size-adaptable displaying grid.

According to another embodiment, the displaying grid is an asymmetric grid.

### BRIEF DESCRIPTION OF THE DRAWINGS

For a more complete understanding of the present invention, reference is now made to the following detailed description taken in conjunction with the accompanying drawings wherein:
**FIG. 1** **-** is a schematic illustration of a screen presenting a prior art e-mail box of a user;
**FIG. 2A** **-** demonstrates a schematic illustration of an embodiment of the present invention, wherein characterizing images of e-mail based selected messages are presented to the user;
**FIG. 2B** **-** demonstrates a schematic illustration of the displaying grid of the characterizing images shown in FIG. 2A, wherein characterizing images are expanded so that the full message is being displayed;
**FIG. 3** **-** shows a displaying grid view of photos derived from the user's e-mail box according to an embodiment of the present invention;
**FIG. 4** - illustrates a quick and easy way to preview/ get a better /in depth view of the user's e-mail messages before fully opening them;
**FIG. 5A** **-** illustrates another embodiment of the present invention, by which when a sender composes an e-mail message, he/she may paste a link of a webpage to the e-mail message;
**FIG. 5B** **-** demonstrates the characterizing image of the e-mail message composed according to the embodiment of FIG. 5A, when received by the addressee of that e-mail;
**FIG. 5C** **-** demonstrates the full message associated with the characterizing image shown in FIG. 5B that includes also the link address;
**FIG. 6** - illustrates another embodiment of the present invention, by which the user plays a video clip associated with the e-mail message upon opening the full e-mail message; and
**FIG. 7** **-** illustrates yet another embodiment of the present invention, by which the user browses through a presentation of slides associated with the e-mail message, upon opening the full e-mail message.

### DETAILED DESCRIPTION

In this disclosure, the term "comprising" is intended to have an open-ended meaning so that when a first element is stated as comprising a second element, the first element may also include one or more other elements that are not necessarily identified or described herein, or recited in the claims.

In the following description, for the purposes of explanation, numerous specific details are set forth in order to provide a better understanding of the present invention by way of examples. It should be apparent, however, that the present invention may be practiced without these specific details.

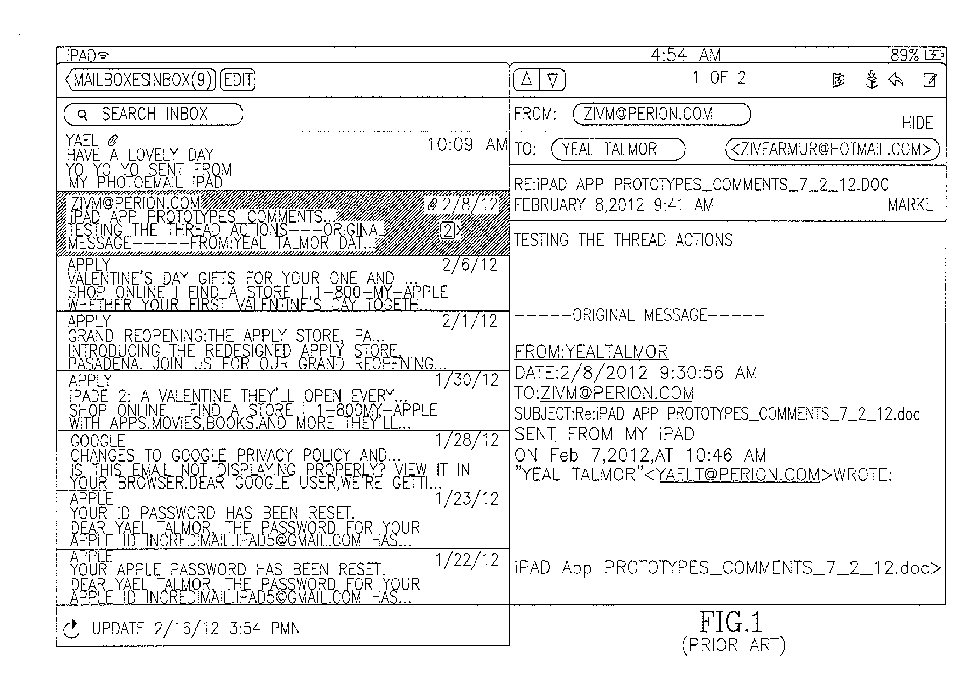

Let us first consider FIG. 1, which is a schematic illustration of a screen presenting a prior art e-mail box of a user, where at the left hand side there is a list of consecutive titles of e-mail messages, and once the cursor rests at one of these titles, the message is opened and displayed in full at the right hand side of the screen.

The present invention on the other hand provides a solution for displaying e-mail messages, one which in fact breaks the current paradigm of the way that e-mail messages are being shown, by providing a group (list) of pre-views to the user of e-mails that are addressed to him/her. The preview list is spread within a special notes grid and allows the user to easily follow the chronological order of e-mail messages.

Let us consider the following example which demonstrates a method of determining how the messages will be displayed for the user.

As already explained hereinabove, the preferred outcome of implementing the method of the present is that each of the displayed messages is displayed at its own optimal size, and the sorting of the messages may be carried out in accordance with their time of receipt. A preferred way of implementing this method that the reader is provided with a user experience of reading an interactive magazine which comprises the private messages addressed to that specific reader, where the reader is also provided with the main elements of the messages, such as the messages' abstracts, similarly to the presentation of an abstract of an article in a magazine.

Thus, according to this example, the method comprises defining a 2 messages' columns structure of a temporary displaying grid, which will typically be bound by the following constraints:
1. Each message will be displayed separately from the other messages, being co-displayed at the same temporary grid display.
2. The number of messages that will be displayed in such a temporary grid display may between 3 to 9 messages.
3. Each of the two columns will comprise 1, 2, 3, 4 or 5 messages.
4. The number of messages comprised in the left hand column will be different from the number of columns that will be comprised in the right hand column.
5. The number of messages that will be displayed at one column cannot be a product of the number of messages that will be displayed at the other column multiplied by an integer.

The size and appearance of each message area will preferably be defined based on the following:
1. What is the length of the text in the abstract of the message being displayed?
2. Are there any one or more attached or embedded pictures that will be displayed? If in the affirmative, a minimized size copy of the picture will be displayed;
3. Are there any files attached to the message? If in the affirmative, an indication of the type of file (e.g. word, excel, etc.) will be part of the message being displayed;
4. Does the original message include a link to an Internet site? If so, the message being displayed will include a preview from that Internet site;
5. Does the original message include a video file (or a link to a video file)? If so, the message being displayed will include an option to enable playing that video file (e.g. video clip) without surfing away from the message being displayed that is associated with that video file;
6. Does the original message include a number of different contents (e.g. an attached file, an attached picture, a link embedded within the message, etc.)? If in the affirmative, an indication for each of the contents included in the message will be displayed.

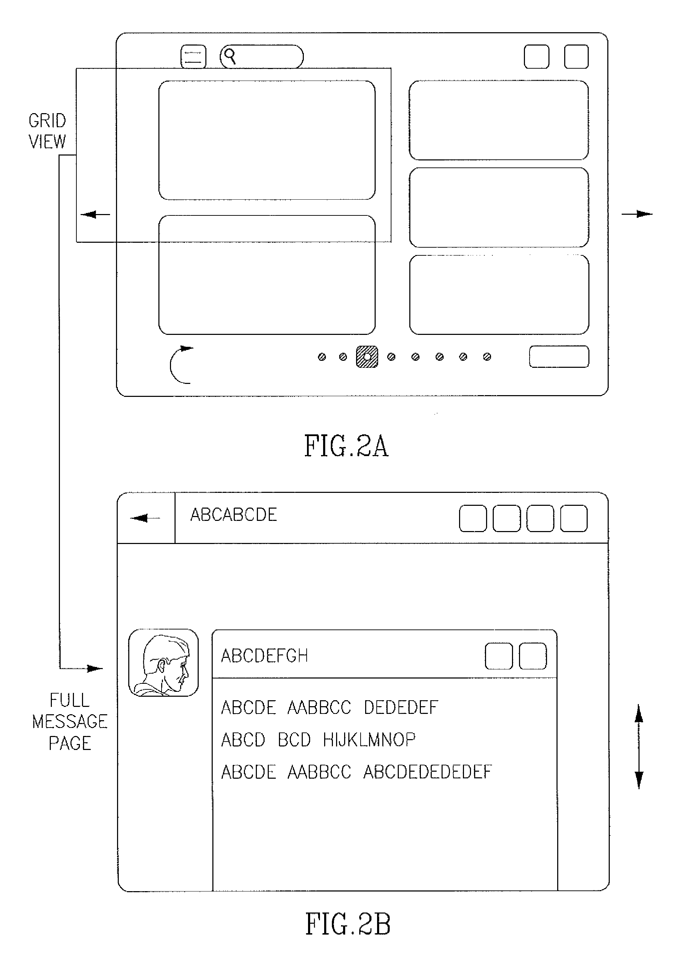

FIG. 2A and FIG. 2B demonstrate an embodiment of the method provided by the present invention. In the preview display demonstrated in FIG. 2A, a displaying grid that comprises five cells is shown, and in each of the cells there is a characterizing image of a different e-mail message, wherein the characterizing images capture the essence of the e-mail, that was derived from a prior analysis carried out on each of the respective e-mail messages, thereby providing the reader with an easy and quick understanding of what is included in the e-mail message (e.g. of the content of the e-mail message). The size of the different cells may be adjusted dynamically, either individually or for all of the cells, so that all the cells may accommodate all the characterizing images of the respective messages that are due for simultaneous display at the screen of the user's device. In the alternative, the size (e.g. dimensions) of the cells (or at least one of the cells) may be kept fixed, while the size of the corresponding characterizing image(s) that should be displayed at the fixed size cell(s), is adapted to the corresponding fixed size(s). As may be seen in this figure, the displaying grid of this example comprises an odd number of cells in the left hand column. Although not shown in this figure, the processor carrying out the analysis and which prepares the displaying grid for the specific user, may determine one (or more) of the messages whose characterizing images are about to be displayed, to be of more importance to the reader (e.g. based on the content of the message, pre-defined user's preferences, etc.) and then prepares the displaying grid so that one or both dimensions of the cell(s) in which the characterizing image of the more or more important messages will be displayed, are increased, to draw the reader's attention to the more important characterizing image (s) as soon as the displaying grid is displayed for the first time to the reader.

Now, let us assume that the reader is interested in accessing an e-mail message associated with one of the characterizing images included in the displaying grid. If the reader device is provided with a touch screen, such as a tablet, smart phone, etc., then all he/she has to do is to touch the cell of interest with one (or two) fingers and open it so the full text of the e-mail is opened, and displayed. If the reader is using a PC computer for example, that result may be achieved by dragging the cursor to the cell, and double clicking on it to open the e-mail message. In addition or in the alternative, once the reader has indicated his/her interest in a certain e-mail message, not only that specific e-mail message is opened in full, but also preceding e-mail messages that belong to the very same thread of e-mails will be opened. In the alternative, the preceding e-mails may be e-mails of the same subject and from the same sender (not necessarily constituting a thread *per se*). These preceding e-mails may in turn appear at the user screen either in full, or only in their characterizing images (e.g. their abstracts), as the case may be.

FIG. 2B illustrates the case where all the preceding e-mails that belong to the thread of e-mail messages associated with the one whose characterizing image was displayed at the top cell of the left column of FIG. 2A displaying grid, become available for the reader.

There are a number of options for arranging the displaying grid, all of which are encompassed within the scope of the present invention. As already described, one of the option is an arbitrary grid where the cells can be adjusted to fit the sizes of the characterizing images being displayed. Another option is to rely on the user's preferences as defined by the user own configuration of the service that will be provided to him/her. Another option is the use of a self learning mechanism, by which the system learns the requested/preferred settings from each user's input when he/she connects for the first time to the service provider, and then the system uses a predetermined number of the latest requested settings to establish therefrom a preferred setting configuration, which may be further updated when newer inputs are gathered.

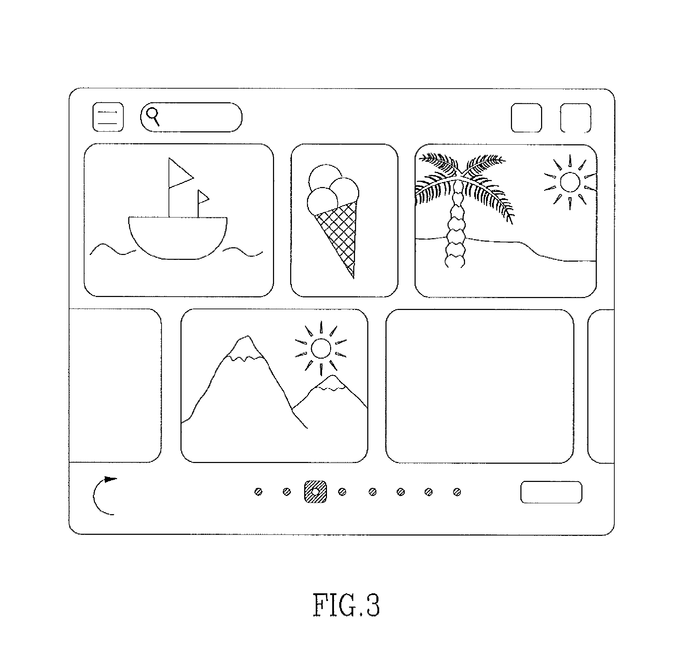

FIG. 3 illustrates another embodiment of the present invention, by which photos that had previously been sent in e-mail messages to the user are collected from the user's e-mail box, and are placed in the cells of a displaying grid. Thus, the user's mail may be considered as being an online storage which provides an option for easy retrieval of the user's photos. Similarly, the user's e-mail box may be used as an online storage for other types of attachments that had been attached to e-mail messages received by the user.

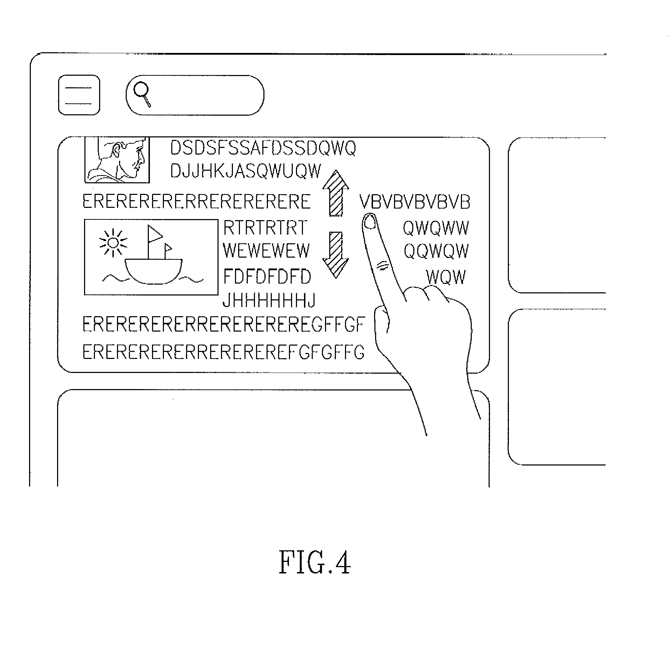

FIG. 4 demonstrates an embodiment for a quick and easy way to preview and/or get a more in depth view for a tablet user before fully opening these e-mails, simply by touching the characterizing image of interest and scrolling till the user finds whatever is that he/she wishes to find.

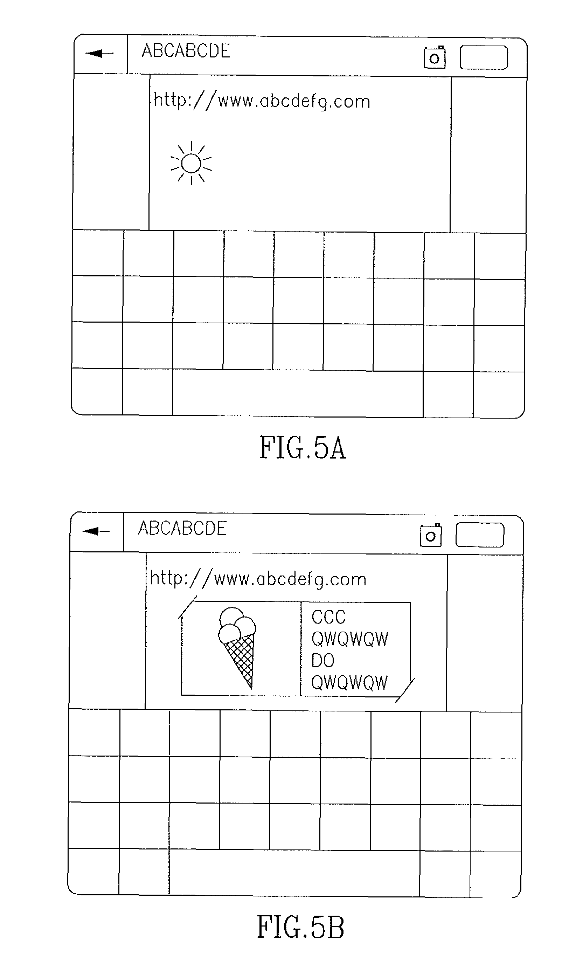

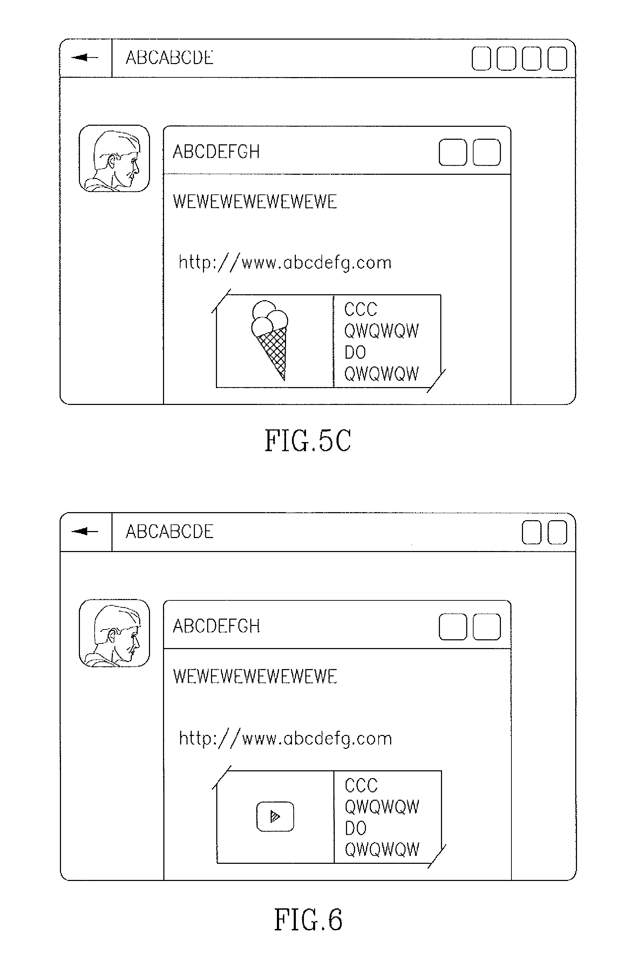

When composing a message, the user can attach (FIG. 5A) a link address of a webpage, and that link will automatically appear as a snippet - a graphic preview of the link's content. Thus when a user receives that e-mail, the characterizing image of the e-mail that will be placed in the appropriate cell of the displaying grid will present part of the visual and/or title and/or text that relate to that webpage (FIG. 5B). This allows the user receiving of the e-mail message (e.g. using Incredimail^{®} for iPad^{®} or any other applicable email service), to enjoy a richer and more enjoyable experience when receiving a message comprising a link address. Next, the user may be provided with a view of the full e-mail message, where the original link address is converted into a snippet (FIG. 5C). This way the full e-mail message offers a richer and more esthetic way to consume content.

FIG. 6 illustrates an example where the snippet includes a link to a website associated with a video clip, a video clip which the receiver of the e-mail message may play either when being in the characterizing image mode of the e-mail message, or after entering the full message mode, as the case may be. In any event, according to a preferred embodiment, the video clip may be played by the user, without being required to open a separate player that is detached from message content, for playing that video clip. Preferably, the incorporation of the snippets is done at the time of creating the e-mail message or at the time of receiving the e-mail message.

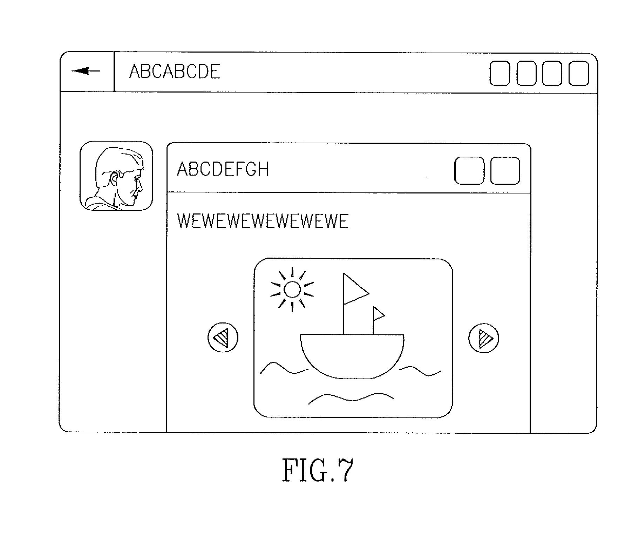

FIG. 7 illustrates a somewhat similar example to the one illustrated in FIG. 6, with the exception that instead of a video clip, there is a Power Point^{®} presentation attached to the e-mail message received. Here again, the presentation may be entered by the user without having to access a Power Point application of Microsoft^{®}.

In the description and claims of the present application, each of the verbs, "comprise" "include" and "have", and conjugates thereof, are used to indicate that the object or objects of the verb are not necessarily a complete listing of members, components, elements or parts of the subject or subjects of the verb.

The present invention has been described using detailed descriptions of embodiments thereof that are provided by way of example and are not intended to limit the scope of the invention in any way. The described embodiments comprise different features, not all of which are required in all embodiments of the invention. Some embodiments of the present invention utilize only some of the features or possible combinations of the features. Variations of embodiments of the present invention that are described and embodiments of the present invention comprising different combinations of features noted in the described embodiments will occur to persons of the art. The scope of the invention is limited only by the following claims.

## Claims

1. A method for use in a communications network for sorting and simultaneously displaying characterizing images of a plurality of messages, wherein the plurality of messages comprises e-mail messages and/or messages that are based on information retrieved from one or more e-mail messages, the method comprising the steps of:
receiving a first plurality of e-mail messages addressed to a specific user;
analyzing content of the first plurality of e-mail messages received and generating a characterizing image for each of a second plurality of messages from among said first plurality of messages, whose characterizing images will be displayed to the specific user simultaneously with the characterizing images of other messages belonging to said second plurality of messages, and wherein the number of messages included in the second plurality of messages is less than or equal to the number of the first plurality of messages;
displaying the characterizing images generated in a plurality of cells arranged in a displaying grid, wherein each of the characterizing images is displayed at a separate cell of the displaying grid.

2. The method of claim 1, further comprising a step of selecting, based on the analysis of the content of the first plurality of e-mail messages, a second plurality of messages from among the first plurality of e-mail messages received, to be displayed to the specific user.

3. The method of claim 1, wherein the displaying grid is a size-adaptable displaying grid.

4. The method of claim 3, wherein the dimensions of one or more of the displaying grid's cells may be changed dynamically to accommodate different characterizing images associated with different messages that need to be displayed.

5. The method of claim 1, wherein the displaying grid is an asymmetric grid.

6. The method of claim 1, further comprising a step of determining a first message which is likely to be the most interesting/important message for the specific user, from among the plurality of messages whose characterizing images are being displayed together to that specific user.

7. The method of claim 6, wherein the characterizing image of said first message is displayed in a cell having an area which is greater than the area of any other of the grid's cells at which other characterizing images are displayed together with the characterizing image of the first message.

8. The method of claim 1, wherein the step of generating a characterizing image based on the content of the plurality of e-mails messages received, comprises selecting most relevant content from each respective e-mail message in order to allow the specific user to easily and quickly understand what the respective e-mail message is about.

9. The method of claim 1, further comprising a step of enabling the specific user to obtain a more comprehensive view of a message, before retrieving the full message whose characterizing image is being displayed.

10. The method of claim 1, further comprising a step wherein prior to sending an e-mail message whose characterizing image will be displayed, its sender adds a link to an Internet address to said e-mail message, and when the characterizing image of said e-mail message is eventually displayed to the specific user, it comprises information that relates to the content retrieved from a webpage associated with the link address added to the e-mail message.

11. The method of claim 10, wherein if the link address is associated with a video clip, said video clip may be played by the specific user without having to fully open the respective e-mail message.

12. The method of claim 10, wherein if the link address is associated with a video clip and/or a Power Point presentation, said respective video clip and/or Power Point presentation may be played by the specific user without accessing any additional software application for playing said video clip and/or said Power Point presentation.

13. The method of claim 1, wherein the step of analyzing content of the received first plurality of e-mail messages further comprises a step of prioritizing the e-mail messages belonging to the first plurality of e-mail messages in accordance with information that relates to the generation of said e-mail messages

14. A computer program product encoding a computer program stored on a non-transitory computer-readable medium for executing a set of instructions by a computer system comprising one or more computer processors for establishing a process for sorting and simultaneously displaying characterizing images of a plurality of messages, wherein the plurality of messages comprises e-mail messages and/or messages that are based on information retrieved from one or more e-mail messages, the method comprising the steps of:
receiving a first plurality of e-mail messages addressed to a specific user;
analyzing content of the first plurality of e-mail messages received and generating a characterizing image for each of a second plurality of messages from among said first plurality of messages, whose characterizing images will be displayed to the specific user simultaneously with the characterizing images of other messages belonging to said second plurality of messages, and wherein the number of messages included in the second plurality of messages is less than or equal to the number of the first plurality of messages;
enabling display of the characterizing images generated, in a plurality of cells arranged in a displaying grid, wherein each of the characterizing images is displayed at a separate cell of the displaying grid.

15. The computer program product of claim 14, wherein the process further comprises a step of selecting, based on the analysis of the content of the first plurality of e-mail messages, a second plurality of messages from among the first plurality of e-mail messages received, whose characterizing images will be displayed to the specific user simultaneously with the characterizing images of all other messages belonging to the second plurality of messages.

16. The computer program product of claim 14, wherein the displaying grid is a size-adaptable displaying grid.

17. The computer program product, wherein the displaying grid comprises an odd number of cells in each column and/or row thereof.
